# DEMANDE DE BREVET EUROPEEN

(11) **EP 2 036 641 A1**
(43) Date de publication de la demande: **18.03.2009**
(21) Numéro de dépôt: 08164188.8
(22) Date de dépôt: 11.09.2008
(51) Int. Cl.: B23D 15/14, B26F 3/04, F42B 3/08

(54) **Cisaille pyrotechnique**

(30) Priorité: 11.09.2007 FR 0757481
(71) Demandeur: PYROALLIANCE, 78130 Les Mureaux (FR)
(72) Inventeur: Forys, Christian, 95430 Auvers sur Oise (FR); Jestin, Didier, 83130 La Garde (FR); Vinci, Dominique, 83190 Ollioules (FR)
(74) Mandataire: Le Roux, Martine

(57) **Abrégé**

La présente invention a pour objet :
- une cisaille pyrotechnique (10) convenant au cisaillement d'éléments (40), dont la structure comprend au moins deux charges creuses linéaires diédriques (11a,12a,13a) et au moins un dispositif d'initiation en détonation (20a) desdites au moins deux charges (11a,12a,13a), **caractérisée en ce que** lesdites au moins deux charges (11a,12a,13a) sont agencées de façon jointive en leur(s) extrémité(s), avec contact de leur substance explosive (21) respective, pour former un polygone ouvert plan (5), les faces internes de chacune des charges creuses linéaires diédriques (11a,12a,13a)) étant orientées vers l'intérieur dudit polygone (5) et l'ouverture (5') dudit polygone (5) permettant à au moins une desdites au moins deux charges (11a,12a,13a) d'être mise en contact avec l'élément à cisailler (40) ;
- un dispositif de cisaillement pyrotechnique comprenant au moins deux cisailles (10) de ce type ;
- un procédé de cisaillement pyrotechnique.

## Description

La présente invention a pour objet une cisaille pyrotechnique originale, les dispositifs et procédés de cisaillement associés.

Le cisaillement en cause est plus particulièrement celui d'éléments présentant une forme allongée (de section quelconque, notamment circulaire, carrée ou rectangulaire), notamment celui de barreaux, tiges, câbles ou chaînes (en un matériau constitutif quelconque, tel un métal ou un matériau composite).

Lesdits cisailles et dispositifs de cisaillement de l'invention sont des outils de faible poids, de faible encombrement, c'est-à-dire des outils portables. Ils conviennent pour assurer un cisaillement (une découpe) rapide.

L'invention trouve application dans tout domaine nécessitant une découpe nette et/ou rapide, par exemple de barreaux, tiges, câbles ou chaînes, notamment dans des contextes d'intervention de forces de l'ordre ou de secours pour l'ouverture de passages obstrués (notamment par au moins un barreau et/ou câble : par exemple une grille devant une fenêtre ou des tiges métalliques dans des décombres d'immeuble).

Les cisailles, dispositifs et procédés de l'invention sont particulièrement adaptés :
- lorsque la durée d'intervention, pour obtenir l'ouverture d'un passage, doit être courte (afin, par exemple, de limiter le temps d'exposition du personnel d'intervention à un danger) ; et/ou
- lorsque les effets collatéraux doivent être minimisés ; et/ou
- lorsqu'un effet de surprise est recherché, par exemple lors d'interventions de forces de l'ordre ; et/ou
- dans un contexte de démantèlement d'installations nucléaires ou d'installations offshore.

L'ouverture rapide d'un passage au travers d'obstacles peut être réalisée au moyen d'explosifs à effet non dirigé. Il est connu que cette façon de procéder nécessite des masses d'explosifs conséquentes et entraîne des effets collatéraux importants, généralement rédhibitoires. De plus, les décombres occasionnés par l'explosion peuvent gêner le passage des moyens d'intervention.

En référence plus particulièrement à la découpe d'éléments de type barreaux sur site d'intervention, des dispositifs mécaniques portables ont déjà été décrits. Le brevet US 4,798,078 décrit ainsi une cisaille mécanique portable à action manuelle, pour cintrer ou couper sur site des tiges métalliques (par exemple des armatures en acier dans du béton armé). Pour la même application, la demande de brevet US 2005/0044923 décrit une cisaille mécanique portable actionnée par un générateur hydraulique. De tels dispositifs sont, d'une part, encombrants et lourds, et, d'autre part, mal appropriés dans un contexte d'urgence.

Des cisailles pyrotechniques font également partie de l'état de l'art. Elles ont plus particulièrement été développées pour la découpe de câbles, barres, chaînes dans le domaine militaire ou d'exploitation offshore. Ces cisailles pyrotechniques utilisent comme éléments coupants des charges creuses linéaires diédriques.

Des charges de ce type ont notamment été décrites dans les demandes de brevet FR 2 464 778 et 2 590 661. Elles constituent des cordeaux détonants de découpage. Elles sont aussi appelées charges coupantes diédriques linéaires. Lesdites charges creuses linéaires diédriques comprennent, au moins dans leur partie creuse, un revêtement métallique, généralement en cuivre ou en plomb, en contact étroit avec leur substance explosive. Ce revêtement métallique est diédrique ; sa section transversale forme un V. La détonation de la substance explosive projette les deux faces dudit revêtement métallique (faces intérieures du diédre) dans son plan de symétrie où leur collision donne naissance à un jet métallique bidimensionnel, en forme de lame, animé d'une grande vitesse (plusieurs milliers de m/s). Lorsque ledit jet rencontre un matériau placé à proximité, il y creuse un sillon, ce qui entraîne le cisaillement (le sectionnement de la pièce en ledit matériau). La substance explosive peut notamment être de type HMX ou RDX.

La demande de brevet FR 2 464 778 décrit plus précisément une cisaille pyrotechnique, de structure rigide, qui présente la forme générale d'un V. Les deux branches dudit V comportent une charge linéaire creuse diédrique. L'angle d'ouverture dudit V est compris entre 20 et 60°. Le dispositif de fixation de la cisaille à l'élément à cisailler applique ledit élément sur les deux branches du V et est situé au moins partiellement du côté de l'ouverture dudit V. Le système d'initiation des deux branches du V (branches qui comportent chacune une charge diédrique) est situé au sommet dudit V. Un seul détonateur est placé à égale distance des deux branches dudit V.

Selon un premier mode de réalisation, les deux branches du V appartiennent à la même charge creuse diédrique, qui est cintrée dans la région du sommet de ce V. Les contraintes et déformations mécaniques ainsi appliquées sont susceptibles de détériorer la charge explosive. La "pointe" du V, dans de telles conditions, ne contribue pas ou peu à l'effet de cisaillement.

Selon un second mode de réalisation, les deux branches du V sont constituées par deux charges diédriques séparées mais identiques, solidarisées à une embase commune située dans la région du sommet de ce V. Lesdites deux charges sont reliées par une enceinte de section réduite qui assure la continuité de l'explosif (entre lesdites deux charges). Le relais de charge explosive ne contribue pas à l'effet de cisaillement.

Deux variantes de réalisation du dispositif de fixation de la cisaille à l'élément à cisailler sont décrites. Selon une première variante, le dispositif de fixation comporte une pièce amovible apte à relier les deux extrémités libres des branches du V ; cette pièce amovible étant munie d'un élément d'appui mobile pouvant être placé au contact de l'élément à cisailler. Selon une seconde variante, le dispositif de fixation comprend au moins un élément élastique qui, préférentiellement, prend appui sur deux portées situées sur la surface extérieure du V. Quelle que soit la variante en cause, pour opérer la fixation, des manipulations d'ajustement à deux mains et, surtout, un accès à 360° autour de l'élément à cisailler, sont nécessaires.

La cisaille pyrotechnique selon FR 2 464 778 est équipée d'un unique système d'initiation, ce qui impose donc une initiation en parallèle de plusieurs cisailles de ce type pour opérer le cisaillement, en plusieurs points, simultanément.

La technologie de ce type de cisaille nécessite par ailleurs une masse d'explosif de 0,6 kg à plusieurs kilogrammes pour cisailler des barreaux métalliques présentant une section de 20 x 60 mm, masse d'explosif bien trop importante, même avec un effet dirigé, dans le contexte des applications visées (voir ci-dessus).

Le modèle d'utilité DE 87 00 717 décrit des éléments de découpe monoblocs en forme de V pouvant être disposés, au mieux, autour ou à l'intérieur d'un élément tubulaire à découper. Chaque élément de découpe monobloc est équipé d'un moyen d'initiation indépendant.

La demande de brevet FR 2 672 983 décrit un container fermé, partagé dans le sens transversal par une cloison interne diédrique. Ledit container comprend ainsi deux cavités étanches, l'une remplie d'un explosif, solide, gélifié ou liquide. La géométrie dudit container est adaptée pour s'ajuster à la géométrie de l'élément à découper.

L'homme du métier est en fait toujours à la recherche de moyens de cisaillement, aptes à cisailler des éléments tels que précisés ci-dessus (barreaux, tiges, câbles, chaînes ... considérés à l'unité mais aussi à plusieurs : on a déjà parlé de grilles...), en un temps bref, en limitant les effets collatéraux et la production de décombres ; moyens de cisaillement portables, de faibles encombrement et masse, ergonomiques et pouvant être aisément positionnés ; moyens de cisaillement convenant tout particulièrement dans des contextes d'intervention rapide de forces de l'ordre ou de secours.

En référence à ce cahier des charges, la présente invention propose, selon son premier objet, une cisaille pyrotechnique performante, convenant au cisaillement d'éléments, tout particulièrement d'éléments de forme allongée (tels des barreaux, tiges, câbles ou chaînes).

Ladite cisaille pyrotechnique de l'invention présente une structure qui comprend d'une part, au moins deux charges creuses linéaires diédriques et d'autre part, au moins un dispositif d'initiation en détonation desdites au moins deux charges. De façon caractéristique, lesdites au moins deux charges sont agencées de façon jointive en leur(s) extrémité(s), avec contact de leur substance explosive respective, pour former un polygone ouvert plan, les faces internes de chacune des charges creuses linéaires diédrique étant orientées vers l'intérieur dudit polygone et l'ouverture dudit polygone permettant à au moins une desdites au moins deux charges d'être mise en contact avec l'élément à cisailler.

On note incidemment ici que les charges creuses linéaires dièdriques peuvent s'analyser comme des segments de telles charges. Leur substance explosive constituent la charge explosive de tels segments.

La structure de la cisaille pyrotechnique de l'invention comprend donc au moins deux charges creuses linéaires diédriques, lesdites au moins deux charges étant assemblées pour constituer un polygone ouvert plan. Ledit polygone ouvert plan présente avantageusement un axe de symétrie. Lesdites au moins deux charges sont, de façon caractéristique, assemblées de manière jointive en leur(s) extrémité(s) (on a bien évidemment compris que deux charges sont ainsi agencées de façon jointive, en l'une de leurs deux extrémités et que lorsque plus de deux charges interviennent, celles des extrémités du polygone ouvert sont jointives avec la charge voisine en l'une de leur deux extrémités tandis que les autres sont jointives, en chacune de leurs deux extrémités, avec des charges voisines différentes dudit polygone), avec contact de leur substance explosive respective. En cours de fonctionnement, la continuité de la propagation du front de détonation est ainsi assurée, du(des) point(s) d'initiation de la cisaille à tout son chargement. Le contact des substances explosives (il s'agit généralement du même type de substance explosive) convient pour la transmission de la détonation.

Au vu des propos ci-dessus, on doit comprendre que les notions d'assemblage "de manière jointive" des charges et de "contact" des substances explosives s'interprètent à la considération du résultat escompté, à savoir la continuité de la propagation du front de détonation et non pas, exclusivement, de façon littérale. En fait, on préconise vivement un réel assemblage de manière jointive des charges (par exemple par collage) et un réel contact (contact direct) des substances explosives. Dans cet esprit, ledit contact est avantageusement optimisé, *i.e.* assuré sur toute la surface accessible de la substance explosive, aux extrémités des charges. Toutefois, l'homme du métier comprend que, dans le cadre de l'invention :
- d'une part, un faible écart (jusqu'à 1 mm) peut être toléré entre des substances explosives à forte sensibilité à l'initiation en détonation. Avec de telles substances, malgré ledit faible écart, la transmission de la détonation a lieu. On parle ici de tolérance, car, dans la pratique, on vise en fait toujours un contact le plus intime possible des substances explosives des charges afin d'assurer une parfaite transmission (par contact) de la détonation et d'éviter toute pollution (par exemple par de l'eau, de l'huile ou une graisse) au niveau dudit faible écart (pollution susceptible d'altérer la transmission de la détonation) ;
- d'autre part, la présence de fines couches d'un vernis protecteur aux extrémités des charges ne saurait être exclue. Ainsi, le contact des charges explosives peut-il être direct ou par le biais de telles fines couches de vernis.

Dans la structure de la cisaille de l'invention, il n'y a ni cintrage d'une unique charge, ni intervention d'une charge relais entre deux charges voisines.

Le polygone plan formé par les au moins deux charges creuses linéaires diédriques est ouvert ; il est ouvert de sorte que l'élément à cisailler puisse être mis en son intérieur, au contact d'au moins une desdites au moins deux charges. Ledit polygone ouvert est conçu pour recevoir ledit élément. Lors de l'utilisation de la cisaille, ledit polygone peut ainsi être disposé ("à cheval") sur l'élément à cisailler et/ou ledit élément à cisailler peut ainsi être introduit dans ledit polygone, les différentes charges constitutives dudit polygone étant alors avantageusement au plus près dudit élément (en tout état de cause, au moins l'une desdites charges est alors au contact dudit élément).

Les faces internes de chacune des charges creuses linéaires diédriques sont évidemment orientées vers l'intérieur du polygone (vers l'élément à cisailler lorsque celui-ci est en place dans le polygone) pour l'effet de cisaillement recherché.

Lors de l'utilisation de la cisaille, au moins une desdites au moins deux charges est en contact avec l'élément à cisailler. On recherche évidemment un contact maximum entre ledit élément et lesdites charges. Lesdites charges sont ainsi avantageusement disposées de sorte que l'élément à cisailler s'inscrive, avec le maximum de contact, dans le polygone desdites charges. L'homme du métier comprend que le couple : forme, dimension du polygone / forme, dimension de l'élément à cisailler est avantageusement optimisé en référence aux distances d'efficacité des charges. La distance d'efficacité d'une charge creuse est la distance maximale pour laquelle on obtient un effet de cisaillement (de découpe) dans un matériau donné.

Selon une première variante, la structure de la cisaille pyrotechnique de l'invention comprend deux charges creuses linéaires diédriques. Le polygone formé est alors un V, dont les deux branches sont généralement appelées à être mises au contact de l'élément à cisailler.

Selon une seconde variante, la structure de la cisaille pyrotechnique de l'invention comprend au moins trois telles charges. Dans le cadre de cette seconde variante, ladite structure comprend avantageusement trois charges de ce type. Le polygone formé est alors de préférence un U évasé : 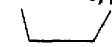 convenant parfaitement pour "recevoir" l'élément à cisailler. La forme exacte dudit U évasé (qui présente avantageusement un axe de symétrie), constitué par les trois charges, peut être peaufinée, selon la configuration géométrique de l'élément à cisailler et les performances recherchées. On peut notamment jouer sur l'inclinaison des branches du U (typiquement de 10 à 60°, avantageusement la même pour les deux branches, par rapport à la perpendiculaire à la base dudit U, à la verticale généralement) et/ou sur la longueur des charges en cause (typiquement de 1 à 25 cm). Ledit U évasé est évidemment avantageusement dimensionné de telle sorte qu'aucun point du plus gros élément à cisailler, inséré dans la cisaille, soit à une distance supérieure à celle d'efficacité de la charge creuse en cause. On conçoit aisément, que, comme indiqué ci-dessus, dans le cadre de cette seconde variante, la structure de la cisaille pyrotechnique de l'invention puisse comporter plus de trois charges : 4, 5, 6 ... Il n'existe pas de limites à ce nombre de charges mais le polygone ouvert, constitués des n charges, doit évidemment, en tout état de cause, présenter une ouverture compatible avec son utilisation.

Les charges sont agencées de façon jointive en au moins une de leurs deux extrémités, avec contact de leur substance explosive respective (voir ci-dessus). Un tel agencement peut être obtenu de diverses manières. Avantageusement, les substances explosives respectives de deux charges jointives sont au contact au niveau de faces desdites deux charges taillées en biseau. Ainsi, avantageusement, les différentes charges présentent-elles des faces taillées en biseau. De manière plus générale, les charges, appelées à être mises en contact, présentent des faces aux géométries complémentaires, par exemple biseautées, par exemple appelées à s'emboîter, de façon à assurer la continuité de la substance explosive.

Outre les au moins deux charges creuses linéaires diédriques, la structure de la cisaille pyrotechnique de l'invention comprend au moins un dispositif d'initiation en détonation desdites au moins deux charges. Avantageusement, elle comprend un unique tel dispositif d'initiation en détonation. Un tel unique dispositif est en effet suffisant, du fait des contacts entre les substances explosives des différentes charges, pour la propagation du front de détonation du point d'initiation de la cisaille à l'ensemble des charges. On ne saurait toutefois totalement exclure la présence d'au moins deux dispositifs d'initiation en détonation dans la structure d'une cisaille pyrotechnique de l'invention.

De tels dispositifs d'initiation en détonation sont *per se* connus. Ils peuvent notamment essentiellement comprendre un détonateur électrique en extrémité d'une ligne électrique, un relais explosif (faisant office de détonateur) en extrémité d'un cordeau détonant souple ou un détonateur à choc en extrémité d'une ligne à tube de choc. Ils comprennent, en tout état de cause, un détonateur ou un moyen faisant office de détonateur (connecté à une ligne d'initiation), apte à initier en détonation les charges.

La cisaille de l'invention, dont on vient ci-dessus de préciser la structure - au moins deux charges creuses linéaires diédriques et au moins un dispositif d'initiation en détonation desdites au moins deux charges constituant ladite structure, en tout état de cause la structure de base - peut exister sous une forme "dépouillée", limitée ou quasi limitée à ladite structure de base ou sous des formes plus "sophistiquées" (incluant ladite structure de base et au moins un élément complémentaire). Elle peut être utilisée, sous sa forme dépouillée ou sous une de ses formes plus sophistiquées, à l'unité. De manière générale, plusieurs cisailles peuvent aussi être utilisées conjointement, de manière indépendante ou reliées entre elles (voir plus loin).

Dans un contexte d'utilisation de plusieurs cisailles de l'invention reliées entre elles, lesdites cisailles peuvent également comporter dans leur structure au moins un dispositif de transmission de la détonation. La structure de la cisaille de l'invention peut ainsi comporter, outre lesdites au moins deux charges originales et au moins un dispositif d'initiation en détonation desdites au moins deux charges, au moins un dispositif de transmission de la détonation. Elle peut comporter plusieurs dispositifs de ce type et convenir ainsi pour initier plusieurs autres cisailles montées en aval. On note incidemment que des dispositifs de transmission de la détonation prévus dans la structure d'une cisaille de l'invention peuvent être utilisés pour initier d'autres dispositifs que des cisailles de l'invention. De manière avantageuse, la cisaille de l'invention comprend dans sa structure un unique dispositif d'initiation en détonation et un unique dispositif de transmission de la détonation. L'optimisation de leur agencement est à la portée de l'homme du métier. Ils sont avantageusement disposés en vis-à-vis (de part et d'autre de l'axe de symétrie du polygone de charges, lorsqu'un tel axe de symétrie existe), de préférence sur les faces extérieures des charges creuses ; leur distance représentant très avantageusement environ les 2/3 du périmètre du polygone.

On se propose maintenant de décrire des variantes de réalisation avantageuse de formes plus "sophistiquées" de cisailles de l'invention. Ces formes (avec logements des charges et/ou avec poignée et/ou avec moyens de pincement de l'élément à cisailler...) sont susceptibles d'exister indépendamment les unes des autres. Très avantageusement, elles existent en combinaison.

Selon une première variante de réalisation avantageuse de la structure d'une cisaille de l'invention, lesdites au moins deux charges sont disposées dans un logement qui épouse la forme externe du polygone ouvert plan formé par lesdites au moins deux charges et qui permet l'action dudit au moins un dispositif d'initiation en détonation desdites au moins deux charges. Ladite structure comprend donc un tel logement. Ledit logement peut par exemple être réalisé en matière plastique ou en métal.

Un tel logement sert donc de réceptacle au polygone de charges. Ledit polygone est ainsi calé, parfaitement stabilisé, sur le plan mécanique (ce qui préserve un bon contact des substances explosives desdites charges) et il est, de surcroit, protégé des agressions extérieures. Un tel logement peut également être opportunément utilisé pour le maintien de différentes pièces, notamment le maintien d'au moins un dispositif d'initiation de la détonation, le maintien d'au moins un dispositif de transmission de la détonation, le maintien d'une poignée de manipulation, le maintien d'un moyen de pincement (voir ci-après)...

Un tel logement comprend donc avantageusement au moins une cavité pour y disposer ledit au moins un dispositif d'initiation en détonation, très avantageusement une cavité pour y disposer un unique dispositif d'initiation en détonation. Ledit logement peut par ailleurs comprendre au moins une cavité pour y disposer au moins un dispositif de transmission de la détonation (voir plus haut) ; avantageusement une cavité pour y déposer un unique dispositif de transmission de la détonation. Ledit logement peut ainsi comprendre deux cavités, avantageusement disposées en vis-à-vis (de part et d'autre de son axe de symétrie lorsqu'un tel axe de symétrie existe), l'une pour y disposer un unique dispositif d'initiation en détonation et l'autre pour y disposer un unique dispositif de transmission de la détonation. Lesdites deux cavités sont avantageusement prévues sur l'extérieur du logement (sur les faces extérieures de celui-ci), très avantageusement espacées d'environ les 2/3 de son périmètre (= du périmètre dudit polygone).

La réalisation d'un tel logement des charges jointives d'une cisaille de l'invention, avec cavité(s) pour dispositif(s) d'initiation en détonation, et éventuellement cavité(s) pour dispositif(s) de transmission de la détonation, ne soulève pas de difficultés particulières. Toute cavité associée à un dispositif d'initiation en détonation ou à un dispositif de transmission de la détonation *est a priori* une cavité qui convient à la disposition en son sein du détonateur ou moyen faisant office de détonateur dudit dispositif d'initiation en détonation ou dudit dispositif de transmission de la détonation.

Le polygone plan constitué des charges jointives existe assurément dans la structure des cisailles de l'invention, présentant une forme dépouillée (lesdites charges étant solidarisées, par collage par exemple). Il peut, dans la variante de réalisation avantageuse précisée ci-dessus - avec logement des charges - n'être constitué qu'au sein dudit logement. Il en est souvent ainsi dans le cadre de cette variante.

Selon une seconde variante de réalisation avantageuse, la structure de la cisaille de l'invention comporte en outre une poignée, avantageusement disposée dans le plan du polygone ouvert formé par lesdites au moins deux charges. Une telle poignée intervient avantageusement dans le cadre de la première variante de réalisation avantageuse précisée ci-dessus, c'est-à-dire qu'elle équipe avantageusement le logement des charges. Elle est toutefois parfaitement susceptible d'intervenir directement sur le polygone de charges, non disposé dans un logement.

Selon une troisième variante de réalisation avantageuse, la structure de la cisaille de l'invention comporte en outre un moyen de pincement de l'élément à cisailler, pour le stabiliser, à l'intérieur du polygone, au contact d'au moins une des charges. Un tel moyen de pincement est susceptible d'exister indépendamment de la poignée et/ou du logement invoqué ci-dessus. Avantageusement, il existe en combinaison avec une poignée ; très avantageusement en combinaison avec une poignée prévue sur un logement des charges.

Un tel moyen de pincement est avantageusement actionnable de la seule main tenant ladite poignée. Ainsi, ledit moyen de pincement peut-il être constitué d'au moins un doigt articulé sur la poignée de façon à pouvoir se déplacer en rotation dans un plan parallèle à celui du polygone des charges. Ledit au moins un doigt est avantageusement du type fourchette à deux branches (au moins un doigt = avantageusement deux doigts). Un système de rappel (par exemple, un ressort, un élastique, une lame...) est associé au(x) doigt(s) pour s'opposer à son(leur) déplacement en rotation dans le sens de l'ouverture de la cisaille. Ainsi, la cisaille pyrotechnique de l'invention peut être installée très simplement (d'une seule main) sur l'élément à cisailler. En exerçant une pression sur le moyen de pincement, on ouvre ladite cisaille. On peut alors insérer l'élément à cisailler dans le polygone constitué par lesdites au moins deux charges de la cisaille (on positionne généralement ladite cisaille sur ledit élément). On relâche ensuite la pression sur ledit moyen de pincement, de telle sorte que, sous la force de rappel du système de rappel, ledit moyen de pincement vient appuyer en force sur ledit élément pour le maintenir dans ledit polygone de la cisaille.

Comme indiqué ci-dessus, un tel moyen de pincement, agencé sur une poignée, est très avantageusement agencé sur une poignée prévue sur le logement des charges. On dispose ainsi d'une cisaille particulièrement performante en référence au cahier des charges présenté dans l'introduction de la présente description.

On rappelle que la cisaille de l'invention, telle que décrite ci-dessus et ci-après en référence aux dessins, convient tout particulièrement pour être utilisée à l'unité ou conjointement avec au moins une autre cisaille, avantageusement du même type.

Selon son deuxième objet, la présente invention concerne donc un dispositif de cisaillement (on peut également parler d'un dispositif de découpe) pyrotechnique convenant au cisaillement (à la découpe donc) d'éléments (tout particulièrement d'éléments de forme allongée, des types précisés ci-dessus, notamment en les matériaux précisés ci-dessus). Ledit dispositif comprend au moins deux cisailles pyrotechniques. De façon caractéristique, il comprend au moins une cisaille pyrotechnique telle que décrite ci-dessus (constituant le premier objet de ladite invention).

Le dispositif de cisaillement de l'invention ne comprend avantageusement que des cisailles pyrotechniques (de l'invention) telles que décrites ci-dessus (au moins deux cisailles de ce type) mais il peut également comprendre au moins une cisaille pyrotechnique d'un autre type, par exemple du type de celle décrite dans la demande FR 2 464 778 opportunément modifiée pour la transmission de la détonation.

Lesdites au moins deux cisailles du dispositif de cisaillement de l'invention peuvent être totalement indépendantes. Elles sont généralement, en tant qu'éléments constitutifs d'un unique dispositif, utilisées conjointement (de manière judicieuse).

Lesdites au moins deux cisailles du dispositif de cisaillement de l'invention sont avantageusement reliées entre elles par au moins une ligne détonique de transmission, connectée, à l'une de ses extrémités, à un dispositif de transmission de la détonation (celui de la cisaille amont) et, à l'autre de ses extrémités, à un dispositif d'initiation en détonation (celui de la cisaille avale). Les différentes cisailles d'un dispositif de cisaillement de l'invention peuvent ainsi être agencées en un réseau, au sein duquel elles sont montées en série et/ou en parallèle. A partir d'au moins une ligne détonique principale d'initiation (= dispositif d'initiation en détonation) (à partir généralement d'une unique ligne de ce type), il peut ainsi être possible d'initier le fonctionnement simultané (en une durée inférieure à 1 ms, l'onde de détonation se propageant à une vitesse d'environ 7 km/s dans le dispositif) de n cisailles, montées en série et/ou en parallèle. De nombreux montages sont possibles. On se propose ci-après d'en décrire, de façon nullement limitative, deux.

Le dispositif de cisaillement de l'invention peut comprendre n cisailles pyrotechniques montées en série. Il peut ainsi être constitué desdites n cisailles, d'une ligne détonique d'initiation principale (= dispositif d'initiation en détonation) connectée au dispositif d'initiation en détonation de la première cisaille et de n-1 lignes détoniques de transmission (= dispositif de transmission de la détonation) reliant en série les n-1 autres cisailles à ladite première cisaille. Dans cette configuration, la ligne détonique d'initiation n'est pas ramifiée et la séquence de cisaillement est initiée sur une première cisaille qui transmet ensuite l'ordre d'initiation successivement à chacune des autres cisailles par l'intermédiaire d'une ligne détonique de transmission. Les cisailles d'un tel dispositif de cisaillement présentent avantageusement dans leur structure un unique dispositif d'initiation en détonation et un unique dispositif de transmission de la détonation.

Selon une autre variante, le dispositif de cisaillement de l'invention est constitué de n cisailles, d'une ligne détonique d'initiation principale (= dispositif d'initiation en détonation), de r lignes détoniques d'initiation ramifiées de ladite ligne principale, de s lignes détoniques de transmission (= dispositif de transmission de la détonation), avec n = r + s. Dans ce cas, la ligne détonique principale d'initiation est subdivisée en r lignes d'initiation ramifiées qui initient chacune séparément r cisailles. Les autres cisailles sont initiées par des lignes détoniques de transmission connectées à au moins une desdites r cisailles.

Ladite ligne détonique principale d'initiation peut être un détonateur électrique en extrémité d'une ligne électrique, un relais explosif en extrémité d'un cordeau détonant souple ou un détonateur à choc en extrémité d'une ligne à tube de choc.

Les lignes détoniques d'initiation ramifiées peuvent consister en des lignes à tube de choc ou en un cordeau détonant souple. Chaque ligne détonique d'initiation ramifiée est reliée à un dispositif d'initiation en détonation d'une cisaille.

Les lignes détoniques de transmission sont généralement constituées de cordeaux détonants souples. Chaque ligne détonique de transmission est reliée à une extrémité à un dispositif de transmission de la détonation d'une cisaille et à l'autre extrémité à un dispositif d'initiation de la détonation d'une autre cisaille, les deux dispositifs étant généralement constitués d'un relais d'explosif faisant office de détonateur.

L'homme du métier saura choisir, en tout état de cause, le nombre de lignes détoniques de transmission et éventuellement le nombre de lignes détoniques d'initiation ramifiées en fonction de l'arborescence souhaitée dans la connexion des cisailles.

L'intérêt d'un tel dispositif de cisaillement de l'invention n'aura pas échappé à l'homme du métier. On insiste tout particulièrement sur l'intérêt à disposer, au sein des dispositifs de cisaillement selon l'invention, de cisailles "sophistiquées", avec logement des charges et/ou poignée et/ou moyen de pincement de l'élément à cisailler, très avantageusement avec logement des charges, poignée prévue sur ledit logement et moyen de pincement. Les dispositifs de cisaillement de l'invention répondent de façon satisfaisante au cahier des charges présenté dans l'introduction du présent texte.

Selon son dernier objet, la présente invention concerne un procédé de cisaillement pyrotechnique d'éléments. Ledit procédé s'analyse comme un procédé d'utilisation des cisailles et dispositifs de cisaillement décrits ci-dessus (cisailles et dispositifs qui constituent respectivement les premier et second objets de la présente invention).

Ledit procédé comprend :
- la manipulation d'au moins une telle cisaille et/ou d'au moins un élément à cisailler de sorte que ledit au moins un élément à cisailler (chaque élément à cisailler, dans le contexte avantageux de l'utilisation exclusive de cisailles de l'invention) se trouve au contact d'au moins une charge d'au moins une telle cisaille ;
- l'initiation de la détonation (au moyen d'une ligne détonique principale d'initiation, de façon connue *per se*).

Ledit procédé peut ainsi comprendre la mise en place d'une (de plusieurs (n)) cisaille(s), (indépendantes ou reliées entre elles,) sur un (sur un ou plusieurs) élément(s) à cisailler. On peut, par exemple, positionner n cisailles, indépendantes ou reliées entre elles (= un dispositif de cisaillement) sur un barreau à cisailler en plusieurs points ou positionner n cisailles, indépendantes ou reliées entre elles (= un dispositif de cisaillement), sur différents barreaux d'une grille.

On a mentionné la manipulation d'au moins une cisaille et/ou d'au moins un élément à cisailler. Le procédé de l'invention englobe en fait les trois variantes ci-après :
- la cisaille est positionnée sur l'élément (contexte plus général de manipulation de ladite cisaille) ;
- l'élément est positionné dans le polygone ouvert plan de ladite cisaille (contexte *a priori* moins fréquent de manipulation dudit élément) ;
- cisaille et élément à cisailler sont manipulés tous les deux...

Le procédé de l'invention comprend, selon une première variante, l'utilisation, la mise en place, d'un dispositif de cisaillement comportant plusieurs cisailles reliées entre elles (en série ou en parallèle à une ligne détonique principale d'initiation) ; dispositif préalablement constitué. Les cisailles en cause sont avantageusement des cisailles de l'invention avec logement des charges et/ou poignée et/ou moyen de pincement de l'élément à cisailler, très avantageusement des cisailles avec logement des charges, poignée prévue sur ledit logement et moyen de pincement.

Le procédé de l'invention peut aussi comprendre, selon une seconde variante :
- la mise en place de cisailles en pinçant lesdites cisailles (équipées de moyens de pincement) sur ledit au moins un élément à cisailler ;
- la mise en liaison, au moyen d'au moins un dispositif de liaison détonique, desdites cisailles, en série et/ou en parallèle, à une ligne détonique principale d'initiation.

Dans le cadre de l'une et l'autre de ces variantes du procédé de l'invention - avec dispositif de cisaillement pré-constitué ou constitué sur le site - la détonation est initiée pour un fonctionnement en simultané des cisailles reliées entre elles.

Le procédé de l'invention inclut donc la manipulation d'au moins une cisaille de l'invention. On a compris qu'il peut également inclure la manipulation d'au moins une cisaille pyrotechnique d'un autre type (voir ci-dessus).

Les figures annexées au présent texte illustrent, de façon nullement limitative, l'invention revendiquée. Sont principalement illustrées, sur lesdites figures, des modes de réalisation préférés de cisailles et dispositifs de cisaillement de l'invention.

La figure 1 montre, en perspective, un agencement des charges creuses linéaires diédriques d'une cisaille de l'invention.

La figure 2 montre, selon une perspective éclatée, les différents éléments constitutifs d'une cisaille de l'invention (variante préférée).

La figure 3 illustre, en perspective, l'utilisation d'une telle cisaille (sa prise en main).

Les figures 4A et 4B montrent, en perspective, une telle cisaille positionnée sur l'élément à cisailler.

Les figures 5A, 5B et 5C schématisent des montages de dispositifs de cisaillement selon l'invention.

La figure 6 illustre un exemple de mise en oeuvre du procédé de l'invention.

La figure 7 illustre un second exemple de mise en oeuvre du procédé de l'invention.

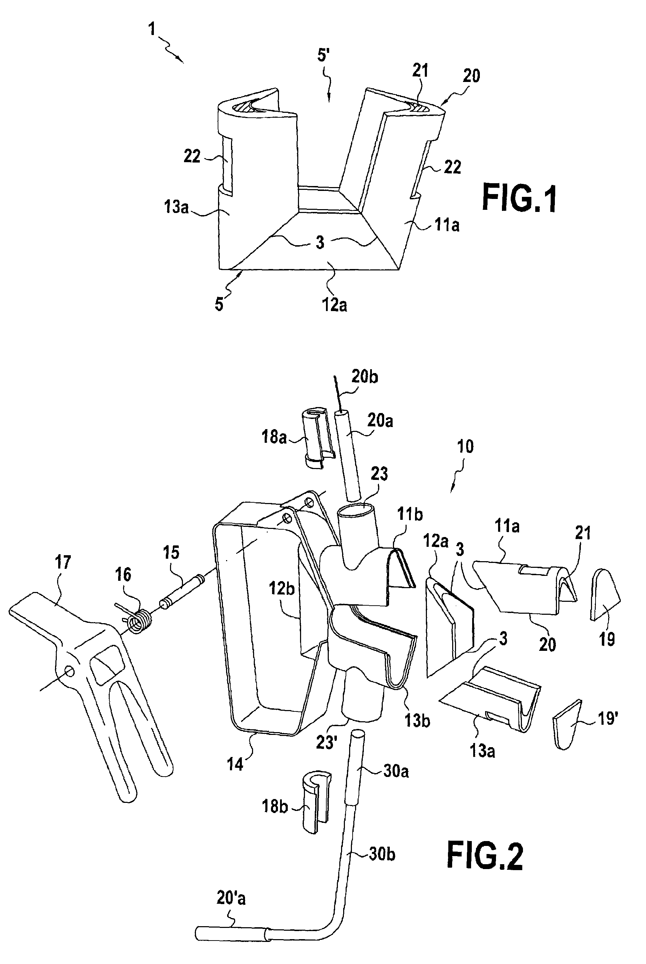

La figure 1 montre trois charges creuses linéaires diédriques 11a, 12a et 13a. Il s'agit par exemple de cordeaux détonants de découpage à enveloppe 20 au plomb, chargés en explosif secondaire 21 de type RDX. La valeur moyenne de la charge explosive d'une telle structure est d'environ 10 g. La capacité de découpe d'une telle structure est de 20 mm pour un acier doux. Une variante possible est l'utilisation de charges creuses linéaires à enveloppe 20 en cuivre, chargées en explosif 21 de type RDX ou HMX. On peut ainsi augmenter la capacité de coupe (de cisaillement) sans augmentation significative de la quantité d'explosif. On peut préciser que l'usage d'un cordeau détonant à enveloppe en cuivre permet d'atteindre une capacité de découpe de 30 mm pour un barreau en acier doux, avec une charge explosive totale de 17 g environ. Les charges en cause peuvent par exemple présenter une longueur de 10 cm. Les indications données ci-dessus, quant à la nature, à la quantité, aux performances, sont purement illustratives.

Les trois charges 11a, 12a et 13a sont agencées, de façon jointive, (elles sont collées) avec contact en au moins l'une de leurs extrémités de leur charge explosive 21. Grâce à cette disposition, un unique dispositif d'initiation en détonation (20a : voir la figure 2) permet le fonctionnement des trois charges. La continuité de la transmission de la détonation est en effet assurée par le contact intime des charges aux différentes jonctions. La coupe en biseau à 49° des extrémités des charges 11a, 12a et 13a (faces 3) permet l'obtention de la structure polygonale 5 montrée, présentant la forme d'un U évasé (symétrique). L'ouverture 5' du polygone des charges présente des angles de 16° (exemple) entre respectivement la charge 11a et la charge 12a et entre ladite charge 12a et la charge 13a.

On a référencé 22 des lamages réalisés sur l'enveloppe 20. L'épaisseur de ladite enveloppe 20 est diminuée au niveau de ces lamages 22 appelés à intervenir en regard des dispositifs d'initiation (20a) et de transmission de la détonation (30a) . Cette opération sur les charges 11a et 13a permet d'augmenter la fiabilité de l'amorçage de la charge et de la transmission de la détonation. On a compris que la structure représentée sur la figure 1 est appelée à fonctionner avec un unique dispositif d'initiation en détonation (20a) et un unique dispositif de transmission de la détonation (30a). Cette structure constitue une cisaille 1 de l'invention, présentant une forme "dépouillée" ou la base d'une cisaille pyrotechnique de l'invention de forme plus sophistiquée, notamment telle que représentée sur la figure 2.

La figure 2 montre donc les éléments constitutifs d'un exemple de cisaille 10 ("sophistiquée") selon l'invention, cisaille 10 à charges creuses linéaires (trois charges) à enveloppe 20 en plomb. Les charges creuses linéaires 11a, 12a, 13a sont logées dans des logements 11b, 12b, 13b (réalisés de préférence en métal ou en matière plastique). Lesdites charges 11a, 12a, 13a sont assemblées par collage pour constituer le polygone 5 = 11a + 12a + 13a, dans le logement 11b + 12b + 13b de la cisaille 10.

Une poignée 14 est fixée sur les logements 11b et 13b. Le mécanisme de pincement de la cisaille 10 sur un élément (barreau) est constitué de l'axe 15, du ressort 16 et de la fourchette 17. Le montage de ces éléments est réalisé par une simple opération d'emmanchement de l'axe 15 sur la chape de la poignée 14. Les pièces de liaison 18a et 18b assurent le verrouillage des détonateurs 20a et 30a sur la cisaille 10 ; elles sont rapportées par une liaison du type vis-écrou. Les détonateurs 20a et 30a sont destinés à être positionnés, respectivement, dans les cavités 23 et 23' prévues, respectivement, sur les logements 11b et 13b. Les couvercles 19 et 19' obturant lesdits logements 11b et 13b des charges coupantes 11a et 13a sont rapportés par collage.

La cisaille 10 représentée est en fait une première cisaille destinée à être reliée à une deuxième cisaille (non représentée).

Le détonateur 20a permettant le déclenchement de la première cisaille 10 peut être:
- un détonateur électrique contenant une charge d'explosif secondaire type pentrite de masse 0,6 g disposé au bout d'une ligne électrique,
- un détonateur à onde de choc disposé au bout d'un tube à onde de choc du type de ceux produits par la Société Norabel,
- ou un détonateur 20a, par exemple en pentrite, placé en bout d'une ligne détonique d'initiation 20b par cordon détonant.

La ligne détonique de transmission 30b de l'onde de détonation, de la première cisaille 10 à une autre cisaille, est constituée classiquement d'un cordeau détonant de transmission à enveloppe plastique souple chargé en explosif du type pentrite à 10 grammes au mètre ; elle est connectée, à une extrémité, à un dispositif de transmission de détonation 30a de la cisaille amont et, à l'autre extrémité, à un dispositif d'initiation en détonation 20'a de la cisaille avale (non représentée) . Les détonateurs relais 30a et 20'a sont chargés en explosif du type pentrite, le chargement en explosif est de 0,8 gramme environ.

Les précisions ci-dessus sont données à titre purement illustratif.

Les pièces 14, 17, 18a, 18b, 19 et 19' sont préférentiellement en matière plastique, du type polyamide chargé en fibres de verre ou équivalent, réalisables par un procédé de moulage par injection. L'axe 15 est préférentiellement en matière plastique chargé réalisé par extrusion ou procédé équivalent. Le ressort 16 est en matériau inoxydable.

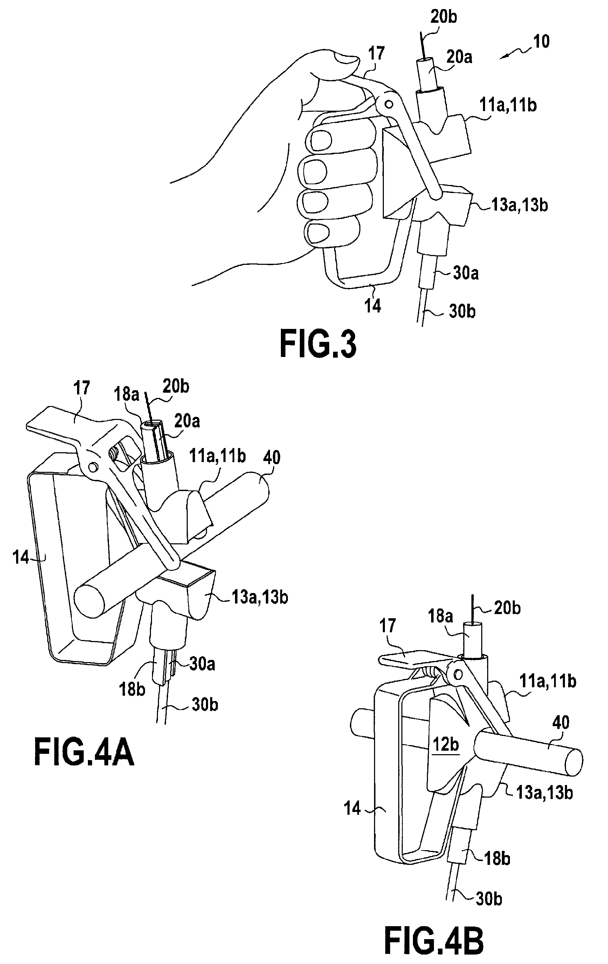

On retrouve les éléments constitutifs de la cisaille 10 sur les figures 3, 4A et 4B. Lesdites figures illustrent l'usage de ladite cisaille 10. Cet usage peut être fait indifféremment par un gaucher ou un droitier.

D'un poids inférieur à 0,5 kg, ladite cisaille 10 se manipule d'une seule main pour être positionnée sur un barreau 40.

Lorsqu'un pouce exerce un effort, de haut en bas, sur la fourchette 17, celle-ci pivote autour de l'axe 15 en laissant un libre passage permettant le positionnement du barreau 40 dans la cisaille 10. Le relâchement de l'effort permet à la fourchette 17 de se refermer sur le barreau 40 et d'y maintenir un effort de serrage calibré par le ressort 16, la cisaille 10 est alors verrouillée sur le barreau 40.

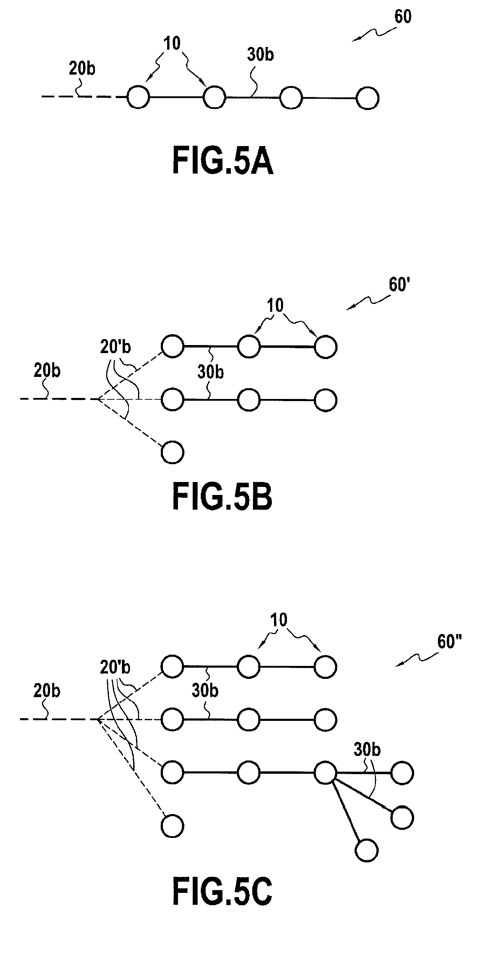

Sur les figures 5A, 5B et 5C, on a donc montré des montages possibles de dispositifs de cisaillement de l'invention 60, 60', 60" (à n cisailles reliées entre elles).

Sur ces trois figures, on a représenté :
- en pointillés gras, la ligne détonique principale d'initiation 20b ;
- en pointillés non gras, des lignes détoniques d'initiation ramifiées 20b',
- en traits pleins, des lignes détoniques de transmission 30b d'une cisaille 10 à l'autre.

La figure 5A illustre un montage de quatre cisailles en série.

Les figures 5B et 5C illustrent des montages de n cisailles en série et en parallèle.

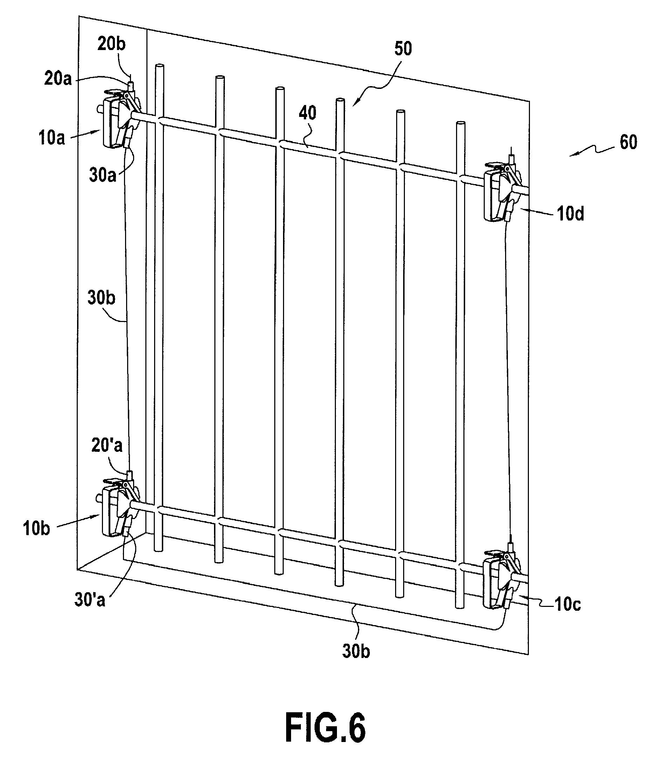

Un montage du type de la figure 5A est utilisé sur la figure 6.

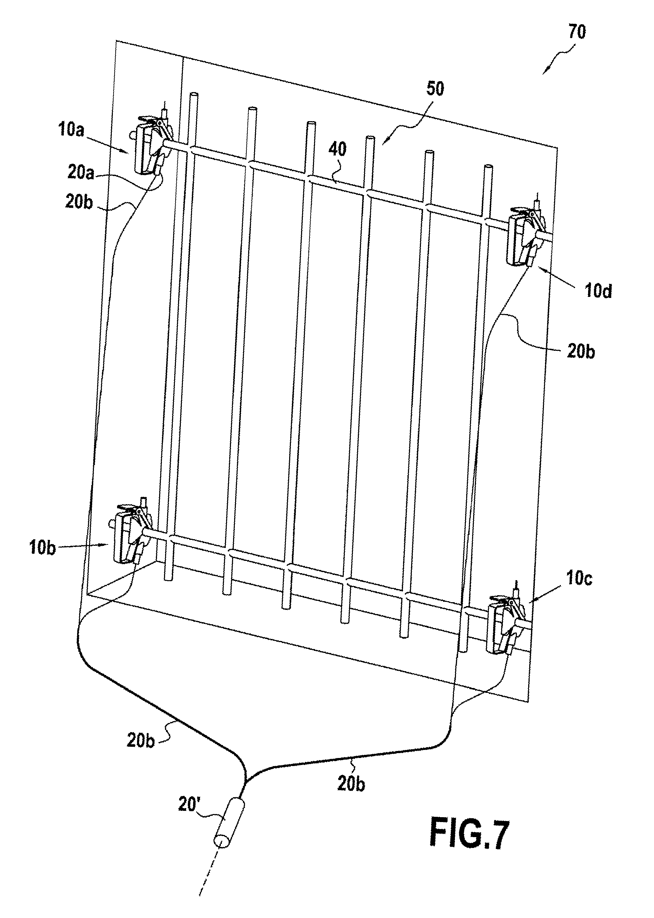

Un montage avec ramification est utilisé sur la figure 7.

La figure 6 représente un dispositif de cisaillement 60 comportant quatre cisailles 10a, 10b, 10c, 10d destinées à découper les attaches (barreaux 40) d'une grille métallique 50. Dans cet exemple, les cisailles 10a, 10b, 10c, 10d sont reliées en série (voir sur la figure 5A) les unes aux autres par des lignes détoniques de transmission 30b associées à des détonateurs 30a, 20'a, 30'a ... La première cisaille 10a est associé un détonateur électrique 20a relié à la ligne de mise en détonation 20b. La mise à feu successive des détonateurs 30a, 20'a, 30'a... provoque le fonctionnement en série des cisailles 10b, 10c et 10d.

Pour l'utilisation d'un tel dispositif, on peut procéder de la manière suivante. Au moyen des lignes détoniques de transmission 30b, on relie les quatre cisailles 10a, 10b, 10c et 10d. On relie la première desdites cisailles 10a à la ligne détonique principale 20b. On fixe ensuite lesdites quatre cisailles 10a à 10d par simple pincement aux emplacements choisis des barreaux à découper. On envoie alors l'ordre de détonation par 20b, ordre qui se propage de la première 10a à la dernière 10d cisaille *via* les lignes détoniques de transmission 30b. Ceci se passe généralement en moins de 1 ms.

La figure 7 est une autre variante de dispositif de cisaillement de l'invention 70. Dans ce cas, chaque cisaille 10a, 10b, 10c et 10d reçoit en parallèle une ligne détonique d'initiation ramifiée 20b (consistant en des lignes à tube de choc se terminant par un détonateur ou en un cordeau souple se terminant par un détonateur 20a). Les lignes détoniques d'initiation ramifiées 20b sont connectées en amont en faisceau 20' à un détonateur électrique ou à une ligne de transmission en cordeau détonant ou à détonateur à onde de choc et en aval aux dispositifs d'initiation en détonation 20a des cisailles.

## Revendications

1. Cisaille pyrotechnique (1 ; 10) convenant au cisaillement d'éléments (40), dont la structure comprend au moins deux charges creuses linéaires diédriques (11a,12a,13a) et au moins un dispositif d'initiation en détonation (20a) desdites au moins deux charges (11a,12a,13a), **caractérisée en ce que** lesdites au moins deux charges (11a,12a,13a) sont agencées de façon jointive en leur(s) extrémité(s), avec contact de leur substance explosive (21) respective, pour former un polygone ouvert plan (5), les faces internes de chacune des charges creuses linéaires diédriques (11a,12a,13a) étant orientées vers l'intérieur dudit polygone (5) et l'ouverture (5') dudit polygone (5) permettant à au moins une desdites au moins deux charges (11a,12a,13a) d'être mise en contact avec l'élément à cisailler (40).

2. Cisaille (1 ; 10) selon la revendication 1, **caractérisée en ce que** sa structure comprend au moins trois charges creuses linéaires diédriques (11a,12a,13a) ; **en ce que** sa structure comprend avantageusement trois charges creuses linéaires diédriques (11a,12a,13a)

3. Cisaille (1 ; 10) selon la revendication 1 ou 2, **caractérisée en ce que** les substance explosives (21) de deux charges jointives (11a et 12a, 12a et 13a) sont au contact au niveau de faces (3) desdites charges (11a et 12a, 12a et 13a) taillées en biseau.

4. Cisaille (10) selon l'une quelconque des revendications 1 à 3, **caractérisée en ce que** sa structure comprend un unique dispositif d'initiation en détonation (20a) desdites au moins deux charges (11a,12a,13a).

5. Cisaille (10) selon l'une quelconque des revendications 1 à 4, **caractérisée en ce que** sa structure comprend en outre au moins un dispositif de transmission de la détonation (30a).

6. Cisaille (10) selon l'une quelconque des revendications 1 à 5, **caractérisée en ce que** lesdites au moins deux charges (11a,12a,13a) sont disposées dans un logement (11b+12b+13b) qui épouse la forme externe du polygone ouvert plan (5) formé par lesdites au moins deux charges (11a,12a,13a) et qui permet l'action dudit au moins un dispositif d'initiation en détonation (20a) desdites au moins deux charges (11a,12a,13a).

7. Cisaille (10) selon la revendication 6, **caractérisée en ce que** ledit logement (11b+12b+13b) comprend au moins une cavité (23) pour y disposer ledit au moins un dispositif d'initiation en détonation (20a) ; **en ce que** ledit logement (11b+12b+13b) comprend avantageusement une cavité (23) pour y disposer un unique dispositif d'initiation en détonation (20a).

8. Cisaille (10) selon la revendication 6 ou 7, **caractérisée en ce que** ledit logement (11b+12b+13b) comprend au moins une cavité (23') pour y disposer ledit au moins un dispositif de transmission de la détonation (30a) ; **en ce que** ledit logement (11b+12b+13b) comprend avantageusement une cavité (23') pour y disposer un unique dispositif de transmission de la détonation (30a).

9. Cisaille (10) selon l'une quelconque des revendications 6 à 8, **caractérisée en ce que** ledit logement (11b+12b+13b) comprend deux cavités (23 et 23'), avantageusement en vis-à-vis, l'une (23) pour y disposer un unique dispositif d'initiation en détonation (20a) et l'autre (23') pour y disposer un unique dispositif de transmission de la détonation (30a).

10. Cisaille (10) selon l'une quelconque des revendications 1 à 9, **caractérisée en ce que** sa structure comprend en outre une poignée (14), avantageusement disposée dans le plan dudit polygone ouvert (5) formé par lesdites au moins deux charges (11a,12a,13a).

11. Cisaille (10) selon l'une quelconque des revendications 1 à 10, **caractérisée en ce que** sa structure comprend en outre un moyen de pincement (17+16+15) de l'élément à cisailler (40), pour le stabiliser, à l'intérieur dudit polygone (5), au contact d'au moins une desdites charges (11a,12a,13a).

12. Cisaille (10) selon les revendications 10 et 11, **caractérisée en ce que** ledit moyen de pincement (17+16+15) comprend au moins un doigt, avantageusement deux doigts, articulé sur ladite poignée (14), apte à se déplacer en rotation dans un plan parallèle à celui dudit polygone ouvert (5) et associé à un système de rappel (16).

13. Dispositif de cisaillement pyrotechnique (60 ; 60' ; 60"; 70) convenant au cisaillement d'éléments (40) et comprenant au moins deux cisailles pyrotechniques, **caractérisé en ce qu'**il comprend au moins une cisaille pyrotechnique (1 ; 10) selon l'une quelconque des revendications 1 à 12.

14. Dispositif (60 ; 60' ; 60" ; 70) selon la revendication 13, **caractérisé en ce qu'**il comprend au moins deux cisailles pyrotechniques (10) selon l'une quelconque des revendications 5 à 13, reliées par au moins une ligne détonique de transmission (30b), connectée, à une extrémité, à un dispositif de transmission de la détonation (30a) et, à l'autre extrémité, à un dispositif d'initiation en détonation (20'a).

15. Dispositif (60 ; 60' ; 60" ; 70) selon la revendication 14, **caractérisé en ce que** lesdites au moins deux cisailles pyrotechniques (10) sont des cisailles selon l'une quelconque des revendications 10 à 12.

16. Procédé de cisaillement pyrotechnique d'au moins un élément (40), **caractérisé en ce qu'**il comprend :
- la manipulation d'au moins une cisaille (1 ; 10) selon l'une quelconque des revendications 1 à 12 et/ou d'au moins un élément à cisailler (40) de sorte que ledit au moins un élément à cisailler (40) se trouve au contact d'au moins une charge (11a,12a,13a) d'au moins une cisaille (1 ; 10) selon l'une quelconque des revendications 1 à 12 ;
- l'initiation de la détonation.

17. Procédé selon la revendication 16, **caractérisé en ce qu'**il comprend :
- la réalisation d'un dispositif (60 ; 60' ; 60" ; 70) selon l'une des revendications 14 ou 15 ;
- la manipulation dudit dispositif (60 ; 60' ; 60" ; 70) de sorte que chaque élément à cisailler (40) se trouve au contact d'au moins une charge (11a,12a,13a) d'au moins une cisaille (1 ; 10) dudit dispositif (60 ; 60' ; 60" ; 70).

18. Procédé selon la revendication 16, **caractérisé en ce qu'**il comprend :
- la mise en place de cisailles (10) selon la revendication 11 ou 12, en pinçant lesdites cisailles (10) sur ledit au moins un élément à cisailler (40) ;
- la mise en liaison, au moyen d'au moins un dispositif de liaison détonique (30a+30b+20'a), desdites cisailles (10), en série et/ou en parallèle, à une ligne détonique principale d'initiation (20b).
